# EUROPÄISCHE PATENTSCHRIFT

(11) **EP 2 018 578 B1**
(45) Veröffentlichungstag und Bekanntmachung des Hinweises auf die Patenterteilung: **09.09.2015**
(21) Anmeldenummer: 07729091.4
(22) Anmeldetag: 14.05.2007
(51) Int. Cl.: G01S 13/90, G01S 13/76

(54) **VERFAHREN ZUR ORTUNG VON OBJEKTEN MITTELS EINES ABBILDENDEN RADARSYSTEMS UND TRANSPONDER FÜR DIE ORTUNG VON OBJEKTEN MITTELS DERARTIGER RADARSYSTEME**
METHOD FOR LOCALIZING OBJECTS BY MEANS OF AN IMAGING RADAR SYSTEM AND TRANSPONDER FOR LOCALIZING OBJECTS BY MEANS OF SUCH RADAR SYSTEMS
PROCÉDÉ POUR LA LOCALISATION D'OBJETS AU MOYEN D'UN SYSTÈME RADAR À REPRÉSENTATION ET TRANSPONDEUR POUR LA LOCALISATION D'OBJETS AU MOYEN DE TELS SYSTÈMES RADAR

(30) Priorität: 12.05.2006 DE 102006022730
(43) Veröffentlichungstag der Anmeldung: 28.01.2009
(73) Patentinhaber: Deutsches Zentrum für Luft- und Raumfahrt e.V., 51147 Köln (DE)
(72) Erfinder: HOUNAM, David, 82234 Wessling (DE); LIMBACH, Markus, 82269 Geltendorf (DE)
(74) Vertreter: Von Kreisler Selting Werner - Partnerschaft von Patentanwälten und Rechtsanwälten mbB
(86) Internationale Anmeldenummer: PCT/EP2007/054639
(87) Internationale Veröffentlichungsnummer: WO 2007/131987

(56) Entgegenhaltungen:
- WO-A2-2005/098472
- DE-A1- 3 248 879
- DE-A1- 3 315 499
- DE-A1- 19 620 682
- US-A- 3 969 725
- US-A1- 2005 212 692

## Beschreibung

Die Erfindung betrifft ein Verfahren zur Ortung von Objekten mittels eines abbildenden Radarsystems mit Signalkompression, bei dem es sich insbesondere um ein SAR (Radar mit synthetischer Apertur)-System handelt. Ferner betrifft die Erfindung einen Transponder für die Ortung von Objekten mittels eines abbildenden Radarsystems mit Radarsendesignalkompression und insbesondere mittels eines SAR-Systems.

Wegen ihrer Unabhängigkeit von Wetterbedingungen, Sichtbedingungen und vom Sonnenstand werden abbildende Radarsysteme bevorzugt eingesetzt. Derartige Systeme werden z.B. zur Fernerkundung, zur Aufklärung und zum Tagging von Objekten (RFID) verwendet, die beispielsweise geortet und identifiziert werden können von einem Flugzeug oder Satelliten getragenen oder örtlichen abbildenden Radarsystem. Hier bieten sich insbesondere Radarsysteme an, bei denen die zeitlich aufeinander ausgesendeten Radarsendesignale einer Kompression unterzogen werden. Damit ist es möglich, bei relativ hoher räumlicher Auflösung demgegenüber relativ lange einzelne modulierte Radarsendesignale auszusenden, deren Spitzenenergie entsprechend gering sein kann, was vorteilhaft für den Energiehaushalt derartiger Systeme bei dennoch relativ hoher räumlicher Auflösung ist.

Damit sich zu ortende Objekte anhand der reflektierten Radarsendesignale zuverlässiger ermitteln lassen können, ist es bekannt, sogenannte transparente Echo-Impulsübertrager (Transponder) vorzusehen. Derartige Transponder sowie ein Verfahren zur Verwendung derartiger Transponder bei einem Radarsystem mit synthetischer Apertur (SAR) als einem Beispiel für ein Radarsystem mit Radarsignalkompression sind aus DE 32 48 879 A1 und DE 196 20 682 C2 bekannt. Aus DE-A-3315499 ist eine Vorrichtung bekannt, die versehen ist mit:
- einer Antenne, die wahlweise als Empfangsantenne zum Empfang eines Radarsendesignals und als Sendeantenne für ein Transpondersendesignal dient,
- einer Entkopplungseinheit, die mit der Antenne verbunden ist und die einen Ausgang zum Weiterleiten eines von der Antenne empfangenen Radarsendesignals und einen vom Ausgang entkoppelten Eingang zum Weiterleiten eines über die Antenne auszusendenden Transpondersendesignals aufweist,
- einer Verzögerungseinheit zum Verzögern des Radarsendesignals zur Erzeugung eines gegenüber dem Radarsendesignal um eine vorgebbare Verzögerungszeit zeitlich verzögerten Triggerimpulses und
- einer Transpondersendesignal-Erzeugungseinheit zum Erzeugen eines vom Triggerimpuls getriggerten Transpondersendesignals, das dem Eingang der Entkopplungseinheit zuführbar ist.

Auf Grund der physikalischen Gegebenheiten lassen sich (SAR-)Transponder nicht so ohne weiteres miniaturisieren. Denn derartige Transponder arbeiten für den Empfang der Radarsendesignale und des Aussenden der Transpondersendesignale mit räumlich getrennten, hoch gebündelten Antennen. Zur Entkopplung der Sende- und Empfangsantennen eines (SAR-)Transponders müssen die Antennen einen Mindestabstand von einigen zig Zentimetern (im Regelfall mindestens 70 cm) aufweisen. Außerdem müssen die bekannten Transponder relativ präzise auf das SAR-Radargerät ausgerichtet sein, um die Radarsendesignale empfangen und die Transpondersendesignale aussenden zu können. All dies schränkt die Anwendungsmöglichkeiten bekannter Transponder ein.

Aufgabe der Erfindung ist es, ein Verfahren zur Ortung und Identifikation von Objekten mittels eines abbildenden Radarsystems und einen Transponder zur Verwendung bei einem derartigen Verfahren zu schaffen, wobei eine Verkleinerung des Transponders sowie eine Verbesserung der Ortungsmöglichkeiten mit einem derartigen Transponder vorgesehen sind.

Zur Lösung dieser Aufgabe wird mit der Erfindung ein Transponder für die Ortung und Identifikation von Objekten mittels eines abbildenden Radarsystems mit Radarsignalkompression und insbesondere eines SAR-Systems (Radar mit synthetischer Apertur) vorgeschlagen, der versehen ist mit den Merkmalen des Anspruchs 1. Ferner dient erfindungsgemäß zur Lösung der obigen Aufgabe ein Verfahren mit den Merkmalen des Anspruchs 6. Einzelne Ausgestaltungen der Erfindung sind Gegenstand der Unteransprüche.

Durch eine einzige Antenne zum Senden und zum Empfangen sowie durch eine entsprechende Signalverarbeitung innerhalb des Transponders gelingt es, einen Transponder zu konstruieren, der nicht präzise ausgerichtet werden muss und klein genug ist, um auf kleine, eventuell bewegliche Objekte montiert werden zu können, wobei diese dann von einem abbildenden Radarsystem mit Radarsignalkompression detektiert und geortet werden können. Erfindungsgemäß gelingt dies auf Signalverarbeitungsebene dadurch, dass das gesendete und vom Transponder empfangene Radarsendesignal regeneriert und gegebenenfalls dabei modifiziert wird. Im Transponder wird also erfindungsgemäß ein Transpondersendesignal erzeugt, das im einfachsten Fall eine Kopie des zuvor empfangenen Radarsendesignals ist. Das Transpondersendesignal wird erfindungsgemäß solange verzögert, bis das empfangene Radarsendesignal abgeklungen ist. Innerhalb des Intervalls zwischen zwei aufeinanderfolgenden Radarsendesignalen kann dann das Transpondersendesignal ausgesendet werden. Auf diese Weise kann zum Empfangen und zum Senden eine einzige Antenne verwendet werden, wodurch sich die Größe des Transponders deutlich reduzieren lässt und insbesondere nicht mehr bestimmt ist durch einen Mindestabstand zwischen einer Sende- und einer Empfangsantenne.

Nach der Erfindung ist ferner vorgesehen, das Transpondersendesignal zu kodieren oder mit anderen Daten zu versehen. Bisher war es lediglich möglich, dass die bekannten Transponder kodierte Radarsendesignale zurücksenden. Es war also bisher lediglich eine Kodierung über das Radarsendesignal selbst und damit von Radarsendesignal zu Radarsendesignal möglich. Mit dem erfindungsgemäßen Konzept der (Re-)Generierung des Transpondersendesignals ist es nun möglich, die Kodierung dezentral, nämlich im Transponder vorzunehmen, was die Zuverlässigkeit der Detektion bzw. der Identifikation erhöht. Somit können nun vom Transponder externe Daten (Kodier- und andere Daten) an die Radarsignalsendestation geschickt werden, und zwar in kodierter Form mit dem Transpondersendesignal.

In vorteilhafter Weiterbildung der Erfindung ist es ferner möglich, als (einzige) Antenne des Transponders eine Rundstrahlantenne zu verwenden, deren Vorteil darin besteht, dass ihre Signale über einen relativ großen Raumwinkelbereich abgestrahlt werden können und dass diese Antennen umgekehrt innerhalb eines größeren Raumwinkelbereichs Radarsignale empfangen können.

Konstruktiv befindet sich zwischen der Antenne des Transponders und der Signalkompressionseinheit einerseits sowie der Transpondersendesignal-Erzeugungseinheit andererseits eine Entkopplungseinheit, die die Antenne entweder mit der Signalkompressionseinheit oder mit der Transpondersendesignal-Erzeugungseinheit verbindet. Für eine derartige Entkopplungseinheit wird zweckmäßigerweise eine Zirkulator eingesetzt.

Die Erfindung dient der Erkennung von Zielen und der Übermittlung von Daten in SAR-Systemen. Dabei wird erfindungsgemäß das Signal von Puls zu Puls moduliert, wobei das empfangene Signal zur Erzeugung des Transponder-Echosignals benutzt wird, indem dies abgetastet und durch ein aus dem Empfangssignal abgeleiteten Triggerimpuls moduliert, rekonstruiert und ausgesendet wird. Ferner können erfindungsgemäß spezifische Erkennungssignale ausgesendet werden. Schließlich ist es von Vorteil, Antennen mit Rundstrahlcharakteristik einzusetzen. Die nach der Erfindung erforderliche Kodierung des Signals im Transponder kann nicht mit einer Pulskompression verglichen werden.

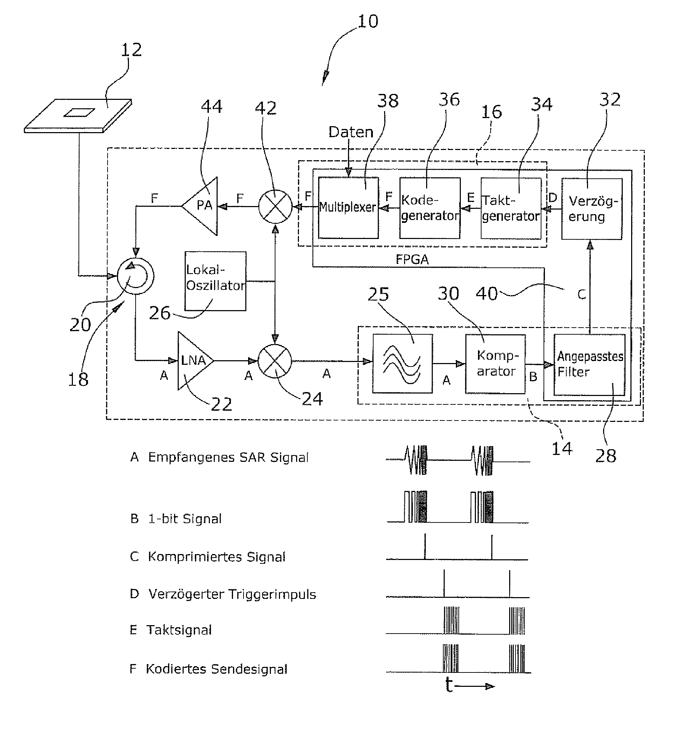

Die Erfindung wird nachfolgend anhand eines Ausführungsbeispiels und unter Bezugnahme auf die Zeichnung näher erläutert. In dieser Zeichnung ist in schematischer Art und Weise ein Blockschaltbild eines Ausführungsbeispiels eines Transponders gezeigt.

Bei dem in der Zeichnung schematisch dargestellten SAR-Transponder 10 handelt es sich um ein Gerät, das das von einem Radar mit synthetischer Apertur (SAR-Radar) ausgestrahlte Radarsendesignal (nachfolgend auch SAR-Signal genannt) empfängt, verarbeitet und so wieder abstrahlt, dass es beim Empfang durch das SAR-Radargerät (nicht dargestellt) unverfälscht geortet und durch eine Veränderung der Signalform eindeutig identifiziert werden kann. Durch die veränderte Signalform lässt sich dass Transpondersendesignal von den reflektierten Radarsendesignalen der Umgebung eines zu ortenden Objekts besser unterscheiden und zuverlässiger detektieren.

Der Transponder 10 weist eine (einzige) Antenne 12 auf, die sowohl dem Empfang eines Radarsendesignals als auch dem Aussenden eines Transpondersendesignals dient. Der Transponder 10 enthält eine Signalkompressionseinheit 14 zur Kompression des empfangenen SAR-Signals A, wobei in der Signalkompressionseinheit 14 ein zur Phase des SAR-Signals A stabiler Triggerimpuls als komprimiertes Signal C gewonnen wird. Mit Hilfe des Triggerimpulses lässt sich nun nach einer zeitlichen Verzögerung ein andersartiges, verzögertes Transpondersendesignal F erzeugen, was in einer Transpondersendesignal-Erzeugungseinheit 16 erfolgt. Das Transpondersendesignal F kann dann über die gleiche Antenne 12 ohne Störung ihres Empfangs wieder abgestrahlt werden. Durch die zeitliche Verzögerung wird nämlich erreicht, dass das empfangene SAR-Signals A abgeklungen ist, wenn das Transpondersendesignal F gesendet wird. Damit braucht der Transponder 10 nur eine einzige Antenne aufzuweisen.

Die veränderte Form des Transpondersendesignals gegenüber dem Radarsendesignal kann darüber hinaus dazu verwendet werden, das Transpondersendesignal zu kennzeichnen, es also von natürlichen Signalen der Umgebung hervorzuheben bzw. es mit Daten zu vermischen, die vom SAR-Radargerät (nicht dargestellt) gelesen und verarbeitet werden können. Durch die Verwendung der gleichen Antenne 12 für den Empfang des Radarsendesignals und das Senden des Transpondersendesignals lässt sich der Transponder 10 bedeutend verkleinern. Außerdem erhöht die Kompression des Radarsendesignals die Empfindlichkeit des Transponders 10 derart, dass eine Rundstrahlantenne verwendet werden kann. Damit ist eine genaue Ausrichtung des Transponders 10 zum SAR-Radargerät nicht mehr erforderlich.

Wie anhand der Zeichnung zu erkennen ist, wird das SAR-Signal A von der Antenne 12 aufgenommen und über eine Entkopplungseinheit 18, die im Falle dieses Ausführungsbeispiels als Zirkulator 20 ausgeführt ist, an einen Empfangsverstärker 22 gegeben. Das SAR-Signal A, das frequenzmoduliert ist, wird mit einem Mischer 24 mit auf diesen einwirkendem Lokaloszillator 26 in eine für die weitere Verarbeitung in einem Filter 25 geeignete Zwischenfrequenz gemischt. Durch das Filter 25 werden unerwünschte Frequenzanteile unterdrückt.

Ein möglicher Algorithmus, um das frequenzmodulierte SAR-Signal A zu komprimieren, umfasst ein sogenanntes angepasstes Filter 28 nach der Methode der 1-Bit-Faltung im Zeitbereich, wie es beispielsweise in Franceschetti, G; Alberti, G.; Pascazio, V.; Schirinzi, G.: "Time-domain convolution of one-bit coded radar", IEEE Proceeding Radar and Signal Processing, October 1991, beschrieben ist. Bei diesem bekannten Verfahren wird das Zwischenfrequenzsignal in einem Komparator 30 in eine 1-Bit-Folge (siehe Signal B), d.h. in eine Folge von 0- und 1-Zustände, umgewandelt. Das angepasste Filter 28 liefert einen Impuls (Signal C), der das komprimierte SAR-Signal A darstellt und zur Triggerung des zu generierenden Transpondersendesignals F dient. Das komprimierte Signal C ist zeitlich sowie phasenstarr an das SAR-Signal A angebunden. Das komprimierte Signal C wird durch Auslösen einer zeitlichen Verzögerung in der Verzögerungseinheit 32 in einen zeitlich versetzten Triggerimpuls (Signal D) verzögert.

Mit Hilfe des gegenüber dem komprimierten Signal C zeitlich verzögerten Triggerimpulses D wird nun ein Taktgenerator 34 aktiviert, der in diesem Ausführungsbeispiel einen Kode-Generator 36 taktet (siehe Signal F). Der Kode dient der Kennzeichnung des Transpondersendesignals F, damit es in den SAR-Daten bzw. in dem SAR-Radargerät eindeutig identifiziert werden kann. Die Kodierung kann von SAR-Impuls zu SAR-Impuls (Azimutmodulation), wie in Hounam, D., Waegel, K., Dill, S.: "Verfahren zur Lokalisierung und Identifizierung von Objekten mittels eines codierten Transponders", Patent: DE 196 20 682, 2001., vorgeschlagen, oder innerhalb der SAR-Impulse oder gemäß beider Verfahren erfolgen. Die Kombination beider Varianten hat den Vorteil, dass man effektiv mehr Brandbreite hat, um i) die Zuverlässigkeit der Detektion zu steigern, ii) die Eindeutigkeit der Identifikation zu verbessern (mehr Kodes) und iii) Daten zu übertragen oder iv) alle drei Maßnahmen zusammen zu verwenden. Außerdem kann man mit einem einzigen Transpondersendesignal die Informationen, d.h. die Kode-Daten oder die zusätzlichen Daten absenden.

Das kodierte Transpondersendesignal F wird über einen Multiplexer 38 geführt, der das Hinzufügen von frei wählbaren, externen Daten erlaubt. Damit können lokale Daten mit dem Transpondersendesignal zurück zum SAR-Radargerät übertragen und bei der Prozessierung der SAR-Daten ausgewertet werden. Sämtliche zuvor beschriebenen Signalverarbeitungsschritte vom angepassten Filter 28 bis zum Multiplexer 38 lassen sich vorteilhafterweise mit einer hochintegrierten, digitalen Schaltung, wie beispielsweise einem FPGA 40 (Floating Point Gate Array) realisieren.

Das gegenüber dem empfangenen SAR-Signal A zeitlich verzögerte Transpondersendesignal F, das darüber hinaus kodiert sein kann und in diesem Ausführungsbeispiel kodiert ist sowie wahlweise externe Daten enthalten kann, wird nun mit einem Mischer 42 mit dem gleichen Lokaloszillator 26 auf die Frequenzebene der Radarsendesignale gemischt und in einem Leistungsverstärker 44 verstärkt. Über den Zirkulator 20 gelangt es dann zur Antenne 12, von der aus es zum SAR-Radargerät abgestrahlt wird.

## Patentansprüche

1. Transponder für die Ortung und Identifikation von Objekten mittels eines abbildenden Radarsystems mit Radarsignalkompression und insbesondere eines SAR-Systems, mit
- einer Antenne (12), die wahlweise als Empfangsantenne zum Empfang eines Radarsendesignals (A) und als Sendeantenne für ein Transpondersendesignal (F) dient,
- einer Entkopplungseinheit (18), die mit der Antenne (12) verbunden ist und die einen Ausgang zum Weiterleiten eines von der Antenne (12) empfangenen Radarsendesignals (A) und einen vom Ausgang entkoppelten Eingang zum Weiterleiten eines über die Antenne (12) auszusendenden Transpondersendesignals (F) aufweist,
- einer Signalkompressionseinheit (14), die ein am Ausgang der Entkopplungseinheit (18) anstehendes, empfangenes Radarsendesignal (A) zu einem Signalkompressionsimpuls (C) komprimiert,
- einer Verzögerungseinheit (32) zum Verzögern des Signalkompressionsimpulses (C) zur Erzeugung eines gegenüber dem Signalkompressionsimpuls (C) um eine vorgebbare Verzögerungszeit zeitlich verzögerten Triggerimpulses CD) und
- einer Transpondersendesignal-Erzeugungseinheit (16) zum Erzeugen eines vom Triggerimpuls (D) getriggerten Transpondersendesignals (F), das dem Eingang der Entkopplungseinheit (18) zuführbar ist,
- wobei in der Transpondersendesignal-Erzeugungseinheit (16) zur Identifikation des Transponders durch das Radarsystem ein kodiertes Signal als Transpondersendesignal (F) oder ein mit zusätzlichen Daten versehenes Transpondersendesignal (F) erzeugbar ist.

2. Transponder nach Anspruch 1, **dadurch gekennzeichnet, dass** die Antenne (12) eine Rundstrahlantenne o.dgl. Signale über einen größeren Raumwinkelbereich abstrahlende bzw. empfangende Antenne ist.

3. Transponder nach Anspruch 1 oder 2, **dadurch gekennzeichnet, dass** die Entkopplungseinheit (18) ein Zirkulator (20) ist.

4. Transponder nach einem der Ansprüche 1 bis 3, **dadurch gekennzeichnet, dass** die Verzögerungseinheit (32) den Triggerimpuls (D) um weniger als den Zeitabstand zwischen zwei aufeinanderfolgende Radarsendesignale (A) oder zwei aufeinanderfolgende Signalkompressionsimpulse (C) verzögert.

5. Transponder nach einem der Ansprüche 1 bis 4, **dadurch gekennzeichnet, dass** die Transpondersendesignal-Erzeugungseinheit (16) eine Kodiereinheit (36) zum Kodieren des Transpondersendesignals zwecks Identifikation des Transponders durch das Radarsystem aufweist, wobei die Kodierung von Radarsendesignal (A) zu Radarsendesignal (A) oder innerhalb eines Radarsendesignals oder gemäß beiden Verfahren erfolgt.

6. Verfahren zur Ortung und Identifikation von Objekten mittels eines abbildenden Radarsystems mit Radarsendesignalkompression und insbesondere eines SAR-Radarsystems, bei dem
- ein Radarsendesignal (A) von einer Antenne (12) eines dem zu ortenden Objekt zugeordneten Transponders (10) empfangen wird,
- das empfangene Radarsendesignal (A) zur Erzeugung eines Signalkompressionsimpulses (C) einer Signalkompression unterzogen wird,
- der Signalkompressionsimpuls (C) zur Erzeugung eines zeitverzögerten Triggerimpulses (D) zeitlich verzögert wird,
- ein Transpondersendesignal (F) erzeugt wird, das von dem verzögerten Triggerimpuls (D) getriggert wird, und
- das Transpondersendesignal (F) über die Antenne (12), die zuvor das Radarsendesignal (A) empfangen hatte, ausgesendet wird,
- wobei in einer Transpondersendesignal-Erzeugungseinheit (16) zur Identifikation des Transponders durch das Radarsystem ein kodiertes Signal als Transpondersendesignal erzeugt wird oder dem Transpondersendesignal (F) zusätzliche Daten hinzugefügt werden.

7. Verfahren nach Anspruch 6, **dadurch gekennzeichnet, dass** das Transpondersendesignal (F) kodiert wird.

8. Verfahren nach Anspruch 7, **dadurch gekennzeichnet, dass** die Kodierung von Radarsendesignal (A) zu Radarsendesignal (A) oder innerhalb der Verarbeitung eines Radarsendesignals (A) erfolgt.

9. Verfahren nach einem der Ansprüche 6 bis 8, **dadurch gekennzeichnet, dass** der Triggerimpuls (D) um weniger als den Zeitabstand zwischen zwei aufeinanderfolgenden Radarsendesignalen (A) zeitverzögert wird.

## Claims

1. A transponder for localizing and identifying objects by means of an imaging radar system operative with radar signal compression and, in particular, a SAR system, said transponder comprising
- an antenna (12) optionally serving as a receiving antenna for receiving a radar transmission signal (A) and as a transmitting antenna for a transponder transmission signal (F),
- a decoupling unit (18) connected to the antenna (12) and having an outlet for routing a radar transmission signal (A) received from the antenna (12), and an inlet decoupled from the outlet for routing a transponder transmission signal (F) to be transmitted through the antenna (12),
- a signal compression unit (14) compressing a received radar transmission signal (A) present at the outlet of the decoupling unit (18) into a signal compression pulse (C),
- a delay unit (32) for delaying the signal compression pulse (C) to generate a trigger pulse (D) delayed for a presettable delay time relative to the signal compression pulse (C), and
- a transponder transmission signal generating unit (16) for generating a transponder transmission signal (F) triggered by the trigger pulse (D), which can be fed to the inlet of the decoupling unit (18),
- wherein, in the transponder transmission signal generating unit (16), there can be generated a coded signal as a transponder transmission signal (F) or a transponder transmission signal (F) provided with additional data, for identification of the transponder by the radar system.

2. The transponder according to any one of claim 1, **characterized in that** the antenna (12) is an omnidirectional antenna or the like antenna for transmission and reception, respectively, of signal across a larger range of spatial angles.

3. The transponder according to claim 1 or 2, **characterized in that** the decoupling unit (18) is a circulator (20).

4. The transponder according to any one of claims 1 to 3, **characterized in that** the delay unit (32) is operative to delay the trigger pulse (D) by less than the temporal distance between two successive radar transmission signals (A) or two successive signal compression pulses (C).

5. The transponder according to any one of claims 1 to 4, **characterized in that** the transponder transmission signal generating unit (16) comprises a coding unit (36) provided for coding the transponder transmission signal for identification of the transponder by the radar system, the coding being performed from radar transmission signal (A) to radar transmission signal (A), or within a radar transmission signal, or according to both methods.

6. A method for localizing and identifying objects by means of an imaging radar system operative with radar transmission signal compression and, in particular, by means of a SAR system, wherein
- a radar transmission signal (A) is received by an antenna (12) of a transponder (10) assigned to the object which is to be localized,
- the received radar transmission signal (A) is subjected to a signal compression for generating a signal compression pulse (C),
- the signal compression pulse (C) is temporally delayed for generating a time-delayed trigger pulse (D),
- a transponder transmission signal (F) is generated which is triggered by the delayed trigger pulse (D), and
- the transponder transmission signal (F) is transmitted via that antenna (12) which before had received the radar transmission signal (A),
- wherein, in a transponder transmission signal generating unit (16), for identification of the transponder by the radar system, a coded signal is generated as a transponder transmission signal or further data are added to the transponder transmission signal (F).

7. The method according to claim 6, **characterized in that** the transponder transmission signal (F) is coded.

8. The method according to claim 7, **characterized in that** the coding is performed from radar transmission signal (A) to radar transmission signal (A) or within the processing of a radar transmission signal (A).

9. The method according to any one of claims 6 to 8, **characterized in that** the trigger pulse (D) is temporally delayed by less than the temporal distance between two successive radar transmission signals (A).

## Revendications

1. Transpondeur pour localiser et identifier des objets à l'aide d'un système de radar à reproduction d'image avec compression de signal de radar et notamment d'un système SAR, avec
- une antenne (12) qui sert alternativement comme antenne de réception pour recevoir un signal d'émission de radar (A) et comme antenne d'émission pour un signal d'émission de transpondeur (F),
- une unité de découplage (18) qui est reliée à l'antenne (12) et qui comprend une sortie pour la transmission d'un signal d'émission de radar (A) reçu par l'antenne (12) et une entrée découplée de la sortie pour la transmission d'un signal d'émission de transpondeur (F) à émettre par l'antenne (12),
- une unité de compression de signal (14) qui compresse un signal d'émission de radar reçu (A) présent à la sortie de l'unité de découplage (18), en une impulsion de compression de signal (C),
- une unité de retardement (32) pour retarder l'impulsion de compression de signal (C) pour engendrer une impulsion de déclenchement (D) retardée dans le temps d'un temps de retardement pouvant être prédéterminé par rapport à l'impulsion de compression de signal (C) et
- une unité de génération d'un signal d'émission de transpondeur (16) pour engendrer un signal d'émission de transpondeur (F) déclenché par l'impulsion de déclenchement (D) et qui peut être acheminé à l'entrée de l'unité de découplage (18),
- un signal codé pouvant être engendré comme signal d'émission de transpondeur (F) ou comme signal d'émission de transpondeur (F) pourvu de données supplémentaires, dans l'unité de génération d'un signal d'émission de transpondeur (16) pour l'identification du transpondeur par le système de radar.

2. Transpondeur selon la revendication 1, **caractérisé en ce que** l'antenne (12) est une antenne omnidirectionnelle ou une antenne émettant ou recevant des signaux sur une plage étendue d'angles spatiaux.

3. Transpondeur selon la revendication 1 ou 2, **caractérisé en ce que** l'unité de découplage (18) est un circulateur (20).

4. Transpondeur selon l'une des revendications 1 à 3, **caractérisé en ce que** l'unité de retardement (32) retarde l'impulsion de déclenchement (D) de moins que l'intervalle entre deux signaux d'émission de radar (A) successifs ou deux impulsions de compression de signal (C) successives.

5. Transpondeur selon l'une des revendications 1 à 4, **caractérisé en ce que** l'unité de génération d'un signal d'émission de transpondeur (16) comprend une unité de codage (36) pour coder un signal d'émission de transpondeur pour l'identification du transpondeur par le système de radar, le codage étant effectué de signal d'émission de radar (A) à signal d'émission de radar (A) ou à l'intérieur d'un signal d'émission de radar ou selon les deux procédés.

6. Procédé pour localiser et identifier des objets à l'aide d'un système de radar à reproduction d'image avec compression de signal de radar et notamment d'un système SAR, où
- un signal d'émission de radar (A) est reçu par une antenne (12) d'un transpondeur (10) associé à l'objet à localiser,
- le signal d'émission de radar (A) reçu est soumis à une compression de signal pour la génération d'une impulsion de compression de signal (C),
- l'impulsion de compression de signal (C) est retardée dans le temps pour la génération d'une impulsion de déclenchement (D) retardé dans le temps,
- un signal d'émission de transpondeur (F) est engendré qui est déclenché par l'impulsion de déclenchement (D) retardée,
- le signal d'émission de transpondeur (F) est émis par l'antenne (12) qui a préalablement reçu le signal d'émission de radar (A),
- un signal codé étant engendré comme signal d'émission de transpondeur (F) ou des données supplémentaires étant ajoutées au signal d'émission de transpondeur (F), dans l'unité de génération d'un signal d'émission de transpondeur (16) pour l'identification du transpondeur par le système de radar.

7. Procédé selon la revendication 6, **caractérisé en ce que** le signal d'émission de transpondeur (F) est soumis à un codage.

8. Procédé selon la revendication 7, **caractérisé en ce que** le codage est effectué de signal d'émission de radar (A) à signal d'émission de radar (A) ou à l'intérieur du traitement d'un signal d'émission de radar (A).

9. Procédé selon l'une des revendications 6 à 8, **caractérisé en ce que** l'impulsion de déclenchement (D) est retardé de moins que l'intervalle entre deux signaux d'émission de radar (A) successifs..
